# EUROPÄISCHE PATENTSCHRIFT

(11) **EP 4 381 751 B1**
(45) Veröffentlichungstag und Bekanntmachung des Hinweises auf die Patenterteilung: **22.04.2026**
(21) Anmeldenummer: 22758443.0
(22) Anmeldetag: 28.07.2022
(51) Int. Cl.: H04W 4/44

(54) **VERFAHREN, COMPUTERPROGRAMM UND VORRICHTUNG ZUM VERARBEITEN VON SIGNALEN**
METHOD, COMPUTER PROGRAM, AND DEVICE FOR PROCESSING SIGNALS
PROCÉDÉ, PROGRAMME INFORMATIQUE, ET DISPOSITIF DE TRAITEMENT DE SIGNAUX

(30) Priorität: 06.08.2021 DE 102021208610
(43) Veröffentlichungstag der Anmeldung: 12.06.2024
(73) Patentinhaber: VOLKSWAGEN AKTIENGESELLSCHAFT, 38440 Wolfsburg (DE)
(72) Erfinder: SASS, Andreas Udo, 30159 Hannover (DE); VOX, Christopher, 38106 Braunschweig (DE); PIEWEK, Jan, 39128 Magdeburg (DE)
(86) Internationale Anmeldenummer: PCT/EP2022/071193
(87) Internationale Veröffentlichungsnummer: WO 2023/012027

(56) Entgegenhaltungen:
- DE-A1- 102016 100 302
- DE-A1- 102019 219 922

## Beschreibung

Die vorliegende Erfindung betrifft ein Verfahren, ein Computerprogramm mit Instruktionen und eine Vorrichtung zum Verarbeiten von Signalen in einem Prozess fortlaufender Datenbereitstellung. Die Erfindung betrifft weiterhin ein Fortbewegungsmittel, in dem ein erfindungsgemäßes Verfahren oder eine erfindungsgemäße Vorrichtung eingesetzt wird.

In heutigen Fortbewegungsmitteln, beispielsweise Kraftfahrzeugen, ist in der Regel eine Vielzahl von Sensoren verbaut, die Signale in Bezug auf eine Reihe von Komponenten des Fortbewegungsmittels bereitstellen. Zusätzlich zu den Sensorsignalen werden auch modellierte Größen innerhalb des Fahrzeugs ausgetauscht, die nicht gemessen, sondern mit einem internen Modell berechnet wurden. Weitere auftretende Signale sind Stellgrößen, die im Fahrzeug verbauten Aktoren eine Steuerung vorgeben. Diese Signale können unter anderem genutzt werden, um datengetrieben eine Alterungsvorhersage zu treffen. Ebenso können solche Signale als Telematikdaten zur Verwertung an einen externen Server übermittelt werden. Die Übermittlung erfolgt dabei in aller Regel mittels Mobilfunk.

Bei der Datenübermittlung ist zu berücksichtigen, dass Kraftfahrzeuge durch Städte und Ortschaften mit unterschiedlicher Ausprägung der verfügbaren Mobilfunkstandards fahren, wie z.B. WLAN, 2G, 3G, 4G oder zukünftig auch 5G. Auch eine zeitlich unterschiedliche Auslastung einzelner Funkzellen führt zu zeitlich und räumlich variierender Bandbreite. Für die Übertragung von Fahrzeugsignalen, meist Daten von CAN-Nachrichten, muss eine hohe Bandbreite zur Verfügung stehen, da CAN-Signale meist eine zeitliche Auflösung von 10 ms haben. Damit die Daten auch in mobilfunktechnisch schlechter ausgebauten Ortschaften übertragen werden können, können gegebenenfalls nur ausgewählte bzw. reduzierte Mengen an Daten übertragen werden. Daher werden regelmäßig Algorithmen zur verlustfreien oder verlustbehafteten Datenkompression herangezogen.

Vor diesem Hintergrund beschreibt DE 10 2016 100 302 A1 ein Verfahren zur Bereitstellung von Telematikdaten von Fahrzeugen. Bei dem Verfahren wird eine Parameterdefinition eines durch eine elektronische Steuereinheit zu berechnenden verarbeiteten Parameters von einem entfernten Server empfangen. Gemäß der Parameterdefinition wird auf der Basis eines durch die elektronische Steuereinheit erzeugten unverarbeiteten Parameters der verarbeitete Parameter erzeugt. Der verarbeitete Parameter wird dann zu einem Fahrzeugdatenpuffer zum Upload zu dem entfernten Server gesendet. Vor dem Upload werden die Daten durch einen Algorithmus verarbeitet und es erfolgt eine verlustbehaftete Datenkompression.

EP 2 573 727 A1 beschreibt eine Telematik-Bordeinheit für ein Fahrzeug. Die Telematik-Bordeinheit umfasst Mittel zum Sammeln von Fahrzeugnutzungsdaten, Mittel zum Übertragen von gesammelten Fahrzeugnutzungsdaten oder davon abgeleiteten analysierten Fahrzeugnutzungsdaten an eine Telematik-Dienstplattform und Mittel zum Identifizieren eines das Fahrzeug benutzenden Fahrers und Bereitstellen einer Fahreridentifikation. Vor dem Übertragen von Daten an die Telematik-Dienstplattform erfolgt eine Datenkompression.

Allerdings kann eine bloße Kompression der Daten oftmals nicht die erforderliche Reduzierung der Datenmenge erzielen. Zudem wäre es wünschenswert, den Kompressionsgrad an die zur Verfügung stehende Bandbreite anpassen zu können.

Vor diesem Hintergrund beschreibt DE 10 2019 219 922 A1 ein Verfahren zur Übertragung einer Mehrzahl an Signalen. Bei dem Verfahren wird die Mehrzahl an Signalen in einem Zeitfenster aufgenommen. Signale, die eine ähnliche Signalform in dem Zeitfenster aufweisen, werden in eine jeweilige Gruppe gruppiert. Ein Signal der jeweiligen Gruppe wird als Repräsentant der Gruppe bestimmt. Anschließend werden Sendedaten, welche für jede Gruppe den Repräsentanten der jeweiligen Gruppe sowie eine jeweilige Transformationsinformation für jedes in der jeweiligen Gruppe enthaltene Signal enthalten, gesendet.

Der Artikel C. Guyeux et al.: "Introducing and Comparing Recent Clustering Methods for Massive Data Management in the Internet of Things", Journal of Sensor and Actuator Networks, Vol. 8 (2019), gibt einen Überblick über gängige und fortgeschrittene Clustering-Verfahren, vergleicht diese und nimmt eine detaillierte Analyse ihrer Leistung in Abhängigkeit von der Datenmenge, der Art der gesammelten Daten oder ihrer Heterogenität, und dem Rauschgrad vor.

Es ist eine Aufgabe der Erfindung, Lösungen zum Verarbeiten von Signalen in einem Prozess fortlaufender Datenbereitstellung bereitzustellen, die eine einfache Anpassung eines Kompressionsgrads einer Datenkompression ermöglichen.

Diese Aufgabe wird durch ein Verfahren mit den Merkmalen des Anspruchs 1, durch ein Computerprogramm mit Instruktionen gemäß Anspruch 7 und durch eine Vorrichtung mit den Merkmalen des Anspruchs 8 gelöst. Bevorzugte Ausgestaltungen der Erfindung sind Gegenstand der abhängigen Ansprüche.

Gemäß einem ersten Aspekt der Erfindung umfasst ein Verfahren zum Verarbeiten von Signalen in einem Prozess fortlaufender Datenbereitstellung die Schritte:
- Sequenzieren der Signale in Abschnitte;
- Bestimmen zumindest eines statistischen Merkmals für jeden der Abschnitte;
- Clustern der Signale auf Basis der bestimmten statistischen Merkmale mittels eines Clusteralgorithmus;
- Bestimmen von Repräsentanten für die Cluster;
- Bereitstellen der Repräsentanten für eine Übertragung; und
- Übertragen der bereitgestellten Repräsentanten;
wobei eine Anzahl der Cluster automatisch an eine sich ändernde verfügbare Bandbreite angepasst wird, indem im Falle einer hohen Bandbreite viele Cluster gebildet und somit viele Repräsentanten übertragen werden, im Falle einer mittleren Bandbreite eine mittlere Anzahl an Clustern gebildet und somit eine kleinere Anzahl Repräsentanten übertragen werden und im Falle einer niedrigen Bandbreite wenige Cluster gebildet und somit wenige Repräsentanten übertragen werden.

Gemäß einem weiteren Aspekt der Erfindung enthält ein Computerprogramm Instruktionen, die bei Ausführung durch einen Computer den Computer zur Ausführung der folgenden Schritte zum Verarbeiten von Signalen in einem Prozess fortlaufender Datenbereitstellung veranlassen:
- Sequenzieren der Signale in Abschnitte;
- Bestimmen zumindest eines statistischen Merkmals für jeden der Abschnitte;
- Clustern der Signale auf Basis der bestimmten statistischen Merkmale mittels eines Clusteralgorithmus;
- Bestimmen von Repräsentanten für die Cluster;
- Bereitstellen der Repräsentanten für eine Übertragung; und
- Übertragen der bereitgestellten Repräsentanten;
wobei eine Anzahl der Cluster automatisch an eine sich ändernde verfügbare Bandbreite angepasst wird, indem im Falle einer hohen Bandbreite viele Cluster gebildet und somit viele Repräsentanten übertragen werden, im Falle einer mittleren Bandbreite eine mittlere Anzahl an Clustern gebildet und somit eine kleinere Anzahl Repräsentanten übertragen werden und im Falle einer niedrigen Bandbreite wenige Cluster gebildet und somit wenige Repräsentanten übertragen werden.

Der Begriff Computer ist dabei breit zu verstehen. Insbesondere umfasst er auch Mikrocontroller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Verarbeiten von Signalen in einem Prozess fortlaufender Datenbereitstellung einen Speicher mit darin abgelegten Instruktionen und einen Prozessor auf, wobei der Prozessor eingerichtet ist, bei Ausführung der Instruktionen die folgenden Schritte zum Verarbeiten von Signalen in einem Prozess fortlaufender Datenbereitstellung auszuführen:
- Sequenzieren der Signale in Abschnitte;
- Bestimmen zumindest eines statistischen Merkmals für jeden der Abschnitte;
- Clustern der Signale auf Basis der bestimmten statistischen Merkmale mittels eines Clusteralgorithmus;
- Bestimmen von Repräsentanten für die Cluster;
- Bereitstellen der Repräsentanten für eine Übertragung; und
- Übertragen der bereitgestellten Repräsentanten;
wobei eine Anzahl der Cluster automatisch an eine sich ändernde verfügbare Bandbreite angepasst wird, indem im Falle einer hohen Bandbreite viele Cluster gebildet und somit viele Repräsentanten übertragen werden, im Falle einer mittleren Bandbreite eine mittlere Anzahl an Clustern gebildet und somit eine kleinere Anzahl Repräsentanten übertragen werden und im Falle einer niedrigen Bandbreite wenige Cluster gebildet und somit wenige Repräsentanten übertragen werden.

Bei der erfindungsgemäßen Lösung werden die zu übertragenden Fahrzeugdaten reduziert, indem bandbreitenadaptiv die Güte eines evolutionären Signalclustering-Verfahrens so eingestellt wird, dass eine verlustbehaftete Datenkompression in Abhängigkeit der zur Verfügung stehenden Bandbreite erfolgt. Mit Hilfe eines Signalclusterings werden Fahrzeugsignale in Cluster bzw. Gruppen zusammengefasst. Zur Datenübermittlung wird nur ein Repräsentant eines Clusters verwendet, wodurch in einem stark korrelierenden Signalraum eine signifikante Datenreduktion erzielt werden kann. Der Clusteralgorithmus wird dabei so eingestellt, dass die Anzahl der resultierenden Cluster automatisch an die verfügbare Bandbreite angepasst ist. Bei einer hohen Bandbreite können also viele Cluster entstehen, woraus entsprechend viele Repräsentanten resultieren. In diesem Fall werden viele Daten verschickt. Bei einer geringen zur Verfügung stehenden Bandbreite wird der Algorithmus so eingestellt, dass nur weniger Cluster entstehen. Es resultieren somit auch nur wenige Repräsentanten und nur wenige Daten werden verschickt.

Steht kein Netz für die Datenübertragung zur Verfügung, so können die Daten in einem zur Verfügung stehenden Datenpuffer gespeichert werden. Dieser Datenpuffer ist so ausgestaltet, dass er zumindest kurze Aufenthaltsphasen in einem Bereich ohne Netzabdeckung überbrücken kann. Vorzugsweis ist der Datenpuffer in seiner Größe so dimensioniert, dass in einem Zeitraum von beispielsweise zwei Stunden ohne Verbindung zum Funknetz keine Daten verloren gehen.

Wenn der Datenpuffer gefüllt ist und immer noch keine Übertragung stattfinden kann, können die Signale nachträglich noch einmal derart geclustert werden, dass weniger Cluster und somit weniger Daten im Puffer entstehen. Es wird in diesem Fall ein stärkerer Informationsverlust akzeptiert.

Erfindungsgemäß werden die Signale in Abschnitte sequenziert und es wird für jeden der Abschnitte zumindest ein statistisches Merkmal bestimmt. Die Signale werden dann auf Basis der bestimmten statistischen Merkmale geclustert.

In vielen Fällen besteht die Datenbasis aus Messungen in einer sehr hohen Auflösung, z.B. im Automobilbereich bei Daten vom CAN-Bus. Das reine Clustern der Zeitreihen dieser Signale führt zu keinen brauchbaren Ergebnissen. Dies hat mehrere Gründe. Zum einen sind die Signale unterschiedlich hoch aufgelöst, weshalb ein direkter Vergleich nur unter sehr hohem Zeit- und Berechnungsaufwand möglich ist, auch wenn es sich um sehr ähnliche Signale handelt, wie z.B. bei der Radgeschwindigkeit vorne rechts und der Radgeschwindigkeit vorne links. Zudem sind die Signale so hochdynamisch, dass sie in der hochaufgelösten Darstellung vom Algorithmus nicht einem gemeinsamen Cluster zugeordnet werden, obwohl sie für einen Menschen ganz offensichtlich denselben Clustern entsprechen. Schließlich ist ein Clustern der ursprünglichen Zeitreihen so speicherintensiv, dass dies nur in Sequenzen möglich ist, z.B. in Abschnitten mit einer Dauer von jeweils zehn Minuten. Versuche mit solchen Abschnitten haben allerdings schlechte Resultate erzielt. Erfindungsgemäß kann die Datenbasis ebenfalls in kleine Sequenzen zerteilt werden. Diese Sequenzen können z.B. eine Dauer von zehn Minuten oder aber auch von Stunden haben. Zu diesen Sequenzen werden nun statistische Merkmale berechnet, d.h. aus den Zeitintervallen werden statistische, künstliche Kennwerte aggregiert. Diese Merkmale dienen als Eingangsdaten für einen Cluster-Algorithmus. Das Ergebnis sind geclusterte Signale. Diese Cluster können als Ausgangsbasis für weitere Verarbeitungsschritte genutzt werden. Vorzugsweise wird als Datenbasis eine veredelte Datenbasis verwendet, bei der die Eingangsdaten äquidistant sind und die gleiche Länge aufweisen. Da lediglich einfache mathematische Operationen benötigt werden, kann der Cluster-Algorithmus auf Seiten der Signalerfassung im Fortbewegungsmittel implementiert werden. Dies ermöglicht eine dateneffiziente Speicherung.

Gemäß einem Aspekt der Erfindung werden für die Anpassung der Anzahl der Cluster an die verfügbare Bandbreite Hyperparameter des Clusteralgorithmus eingestellt. Hyperparameter beeinflussen das Ergebnis des Clusterings, d.h. aus der Einstellung der Hyperparameter resultieren unterschiedliche Güten und Clusteranzahlen. Welche Hyperparameter zur Verfügung stehen und welche Auswirkungen die Hyperparameter auf die Anzahl der Cluster haben, hängt vom gewählten Clusteralgorithmus und den jeweiligen Signalen ab, die geclustert werden sollen. Die Einstellungen der Hyperparameter für verschiedene verfügbare Bandbreiten können z.B. im Vorfeld experimentell ermittelt werden.

Gemäß einem Aspekt der Erfindung wird ein Merkmalsraum der bestimmten statistischen Merkmale vor dem Clustern in einen Raum niedrigerer Dimension transformiert. Vorzugsweise erfolgt dabei eine Überführung in eine eindimensionale Darstellung. Aus der Transformation in einen Raum niedrigerer Dimension resultiert eine hochqualitative Datenkomprimierung zur Signalbeschreibung. Die resultierende reduzierte Datengrundlage ist für die korrekte Identifizierung gleicher Signale im vorhandenen Signalraum besonders vorteilhaft, da sie eine maschinelle Verarbeitung der Daten erleichtert und eine fehlerfreie Signalzuordnung unterstützt.

Gemäß einem Aspekt der Erfindung wird für das Transformieren des Merkmalsraums eine Hauptkomponentenanalyse auf die bestimmten statistischen Merkmale angewandt oder es wird zumindest ein bestimmtes statistisches Merkmal ausgewählt. Die Hauptkomponentenanalyse, auch als Hauptachsentransformation bekannt, ist ideal dazu geeignet, umfangreiche Datensätze zu strukturieren, indem die vorliegenden statistischen Variablen durch eine geringere Zahl möglichst aussagekräftiger Hauptkomponenten genähert werden. Alternativ besteht die Möglichkeit, nur ein bestimmtes statistisches Merkmal oder eine reduzierte Auswahl statistischer Merkmale zu nutzen, z.B. den Mittelwert von bestimmten Zeitperioden. Auch mit diesem Ansatz lassen sich geeignete Ergebnisse erzielen. Welche statistischen Merkmale für eine konkrete Anwendung am besten geeignet sind, kann empirisch bestimmt werden. Vorzugsweise ist die Auswahl der statistischen Merkmale im Betrieb anpassbar.

Gemäß einem Aspekt der Erfindung ist das zumindest eine statistische Merkmal ein Mittelwert, ein Maximalwert, ein Minimalwert oder ein Quantil. Bei dem Quantil kann es sich insbesondere um ein Quartil handeln, d.h. die Quantile Q_{0,25}, Q_{0,5} und Q_{0,75}, auch als unteres Quartil, mittleres Quartil und oberes Quartil bezeichnet. Alle diese statistischen Merkmale sind gut für eine nachfolgende Bildung von Clustern geeignet. Selbstverständlich kann auch eine Auswahl oder Teilmenge von statistischen Merkmalen bestimmt werden.

Gemäß einem Aspekt der Erfindung wird für das Clustern der Signale ein dichtebasiertes Clusterverfahren, ein partitionierendes Clusterverfahren oder ein hierarchisches Clusterverfahren verwendet. Als dichtebasiertes Clusterverfahren kann beispielsweise ein DBSCAN-Algorithmus zum Einsatz kommen. Als partitionierendes Clusterverfahren bietet sich die Verwendung eines K-Means Algorithmus an. Beispiele für geeignete hierarchische Clusterverfahren sind agglomeratives Clustering oder ein Mean-Shift-Algorithmus. Die Verwendung von hierarchischen Clusterverfahren hat den Vorteil, dass keine Vorkenntnisse über die Anzahl der Cluster erforderlich sind. Zudem ist die Form der Cluster nicht eingeschränkt. Vorzugsweise werden Silhouettenkoeffizienten genutzt, um die Qualität des Clusterings zu erfassen.

Besonders vorteilhaft wird ein erfindungsgemäßes Verfahren oder eine erfindungsgemäße Vorrichtung in einem (teil-)autonom oder manuell gesteuerten Fortbewegungsmittel eingesetzt. Bei dem Fortbewegungsmittel kann es sich insbesondere um ein Kraftfahrzeug handeln, aber auch um ein Schiff, ein Fluggerät, z.B. einen Volocopter, eine Baumaschine, etc. Auch eine Anwendung in mobilen Produktionsmaschinen ist möglich. Die zu übertragenden Daten können beispielsweise für Telematikdienste genutzt werden. Zukünftig können diese Daten auch für prädiktive Services genutzt werden, wie z.B. die prädiktive Instandhaltung (engl. Predictive Maintenance). Dazu ist es sinnvoll, dass Daten des ganzen Fahrzeuglebens zur Verfügung stehen. Dabei ist es wichtiger, Daten über das gesamte Fahrzeugleben für eine Auswertung zu besitzen, als dass die Daten sowohl zeitlich als auch hinsichtlich der Diskretisierung zwar besonders hoch aufgelöst, dafür aber lückenhaft sind.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Verarbeiten von Signalen in einem Prozess fortlaufender Datenbereitstellung;
- Fig. 2: zeigt eine erste Ausführungsform einer Vorrichtung zum Verarbeiten von Signalen in einem Prozess fortlaufender Datenbereitstellung;
- Fig. 3: zeigt eine zweite Ausführungsform einer Vorrichtung zum Verarbeiten von Signalen in einem Prozess fortlaufender Datenbereitstellung;
- Fig. 4: stellt schematisch ein Fortbewegungsmittel dar, in dem eine erfindungsgemäße Lösung realisiert ist;
- Fig. 5: zeigt schematisch eine Reihe von Signalen, die einer Vorverarbeitung unterzogen werden sollen;
- Fig. 6: zeigt schematisch die Signale aus Fig. 5 nach Abschluss der Vorverarbeitung;
- Fig. 7: zeigt schematisch eine Unterteilung der vorverarbeiteten Signale in Abschnitte;
- Fig. 8: veranschaulicht eine Extraktion von Merkmalsvektoren aus den Abschnitten;
- Fig. 9: veranschaulicht eine Transformation der Merkmalsvektoren in einen statistischen Merkmalsraum;
- Fig. 10: veranschaulicht eine Transformation des Merkmalsraums der statistischen Merkmale in eine eindimensionale Darstellung;
- Fig. 11: illustriert auf Basis der eindimensionalen Darstellung der statistischen Merkmale generierte Cluster;
- Fig. 12: illustriert ein Beispiel eines Clusterings mit vielen Clustern, einer mittleren Anzahl an Clustern und wenigen Clustern; und
- Fig. 13: zeigt einen zugehörigen Silhouettenindex für unterschiedliche Anzahlen an aus dem Clustering resultierenden Clustern.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

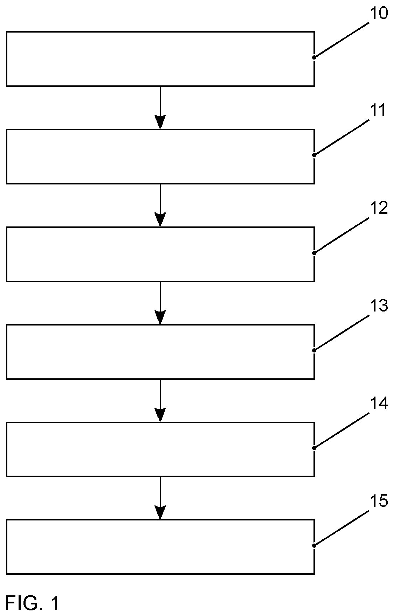

Fig. 1 zeigt schematisch ein Verfahren zum Verarbeiten von Signalen in einem Prozess fortlaufender Datenbereitstellung, z.B. von Sensorsignalen, modellierten Größen oder Stellgrößen. In diesem Beispiel erfolgt zunächst eine Vorverarbeitung der Signale. Im Rahmen dieser Vorverarbeitung werden die Signale zunächst in Abschnitte sequenziert 10. Für jeden der Abschnitte wird dann zumindest ein statistisches Merkmal bestimmt 11, z.B. ein Mittelwert, ein Maximalwert, ein Minimalwert oder ein Quantil. Anschließend kann ein Merkmalsraum der bestimmten statistischen Merkmale optional zunächst in einen Raum niedrigerer Dimension transformiert werden 12. Dazu kann beispielsweise eine Hauptkomponentenanalyse auf die statistischen Merkmale angewandt werden oder zumindest ein bestimmtes statistisches Merkmal ausgewählt werden. Die Signale werden nun mittels eines Clusteralgorithmus auf Basis der bestimmten statistischen Merkmale geclustert 13. Für die Anpassung der Anzahl der Cluster an die verfügbare Bandbreite können beispielsweise Hyperparameter des Clusteralgorithmus eingestellt werden. Der Clusteralgorithmus kann z.B. ein dichtebasiertes Clusterverfahren, ein partitionierendes Clusterverfahren oder ein hierarchisches Clusterverfahren implementieren. Für die aus dem Clustern 13 resultierenden Cluster werden anschließend Repräsentanten bestimmt 14. Zumindest die als Repräsentanten bestimmten Signale werden schließlich für eine Übertragung bereitgestellt 15. Beim Clustern 13 der Signale wird eine Anzahl der Cluster automatisch an eine sich ändernde verfügbare Bandbreite angepasst, indem im Falle einer hohen Bandbreite viele Cluster gebildet und somit viele Repräsentanten übertragen werden, im Falle einer mittleren Bandbreite eine mittlere Anzahl an Clustern gebildet und somit eine kleinere Anzahl Repräsentanten übertragen werden und im Falle einer niedrigen Bandbreite wenige Cluster gebildet und somit wenige Repräsentanten übertragen werden.

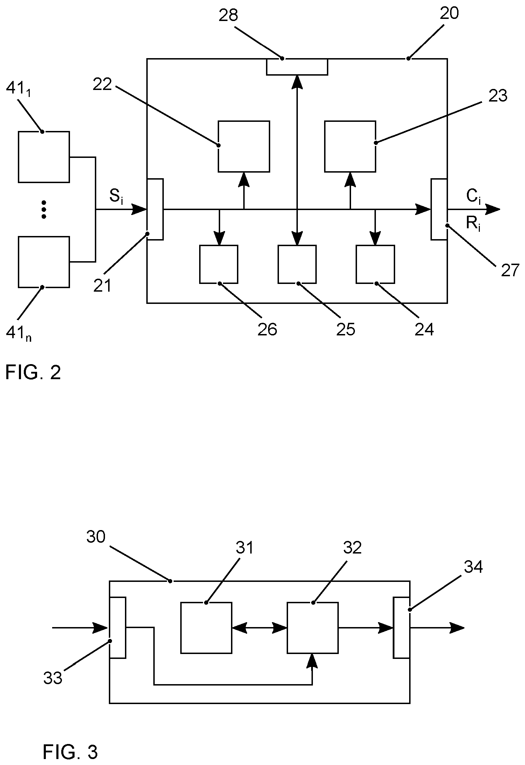

Fig. 2 zeigt eine vereinfachte schematische Darstellung einer ersten Ausführungsform einer Vorrichtung 20 zum Verarbeiten von Signalen in einem Prozess fortlaufender Datenbereitstellung, z.B. von Sensorsignalen, modellierten Größen oder Stellgrößen. Die Vorrichtung 20 hat einen Eingang 21, über den Signale Sᵢ verschiedener Sensoren 41ᵢ empfangen werden können, von denen exemplarisch zwei dargestellt sind. Für eine Vorverarbeitung der Signale Sᵢ sind ein Sequenzierungsmodul 22 und ein Analysemodul 23 vorgesehen. Das Sequenzierungsmodul 22 ist dazu eingerichtet, die Signale Sᵢ in Abschnitte zu sequenzieren. Das Analysemodul 23 bestimmt für jeden der Abschnitte zumindest ein statistisches Merkmal z.B. einen Mittelwert, einen Maximalwert, einen Minimalwert oder ein Quantil. Das Analysemodul 23 kann optional dazu eingerichtet sein, einen Merkmalsraum der statistischen Merkmale nach der Bestimmung der Merkmale in einen Raum niedrigerer Dimension zu transformieren, z.B. durch Anwendung einer Hauptkomponentenanalyse auf die statistischen Merkmale oder durch Auswahl zumindest eines bestimmten statistischen Merkmals. Ein Clustermodul 24 clustert anschließend die Signale Sᵢ mittels eines Clusteralgorithmus auf Basis der bestimmten statistischen Merkmale. Für die Anpassung der Anzahl der Cluster an die verfügbare Bandbreite können beispielsweise Hyperparameter des Clusteralgorithmus eingestellt werden. Der Clusteralgorithmus kann z.B. ein dichtebasiertes Clusterverfahren, ein partitionierendes Clusterverfahren oder ein hierarchisches Clusterverfahren implementieren. Das Clustermodul 24 ist zudem dazu eingerichtet, für die aus dem Clustern resultierenden Cluster Repräsentanten Rᵢ zu bestimmen. Zumindest die als Repräsentanten Rᵢ bestimmten Signale Sᵢ werden schließlich über einen Ausgang 27 der Vorrichtung 20 für eine Übertragung bereitgestellt. Das Clustermodul 24 ist eingerichtet, beim Clustern der Signale Sᵢ eine Anzahl der Cluster automatisch an eine sich ändernde verfügbare Bandbreite anzupassen, indem im Falle einer hohen Bandbreite viele Cluster gebildet und somit viele Repräsentanten Rᵢ übertragen werden, im Falle einer mittleren Bandbreite eine mittlere Anzahl an Clustern gebildet und somit eine kleinere Anzahl Repräsentanten Rᵢ übertragen werden und im Falle einer niedrigen Bandbreite wenige Cluster gebildet und somit wenige Repräsentanten Rᵢ übertragen werden.

Das Sequenzierungsmodul 22, das Analysemodul 23 und das Clustermodul 24 können von einem Kontrollmodul 25 gesteuert werden. Über eine Benutzerschnittstelle 27 können gegebenenfalls Einstellungen des Sequenzierungsmoduls 22, des Analysemoduls 23, des Clustermoduls 24 oder des Kontrollmoduls 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Das Sequenzierungsmodul 22, das Analysemodul 23, das Clustermodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

Fig. 3 zeigt eine vereinfachte schematische Darstellung einer zweiten Ausführungsform einer Vorrichtung 30 zum Verarbeiten von Signalen in einem Prozess fortlaufender Datenbereitstellung. Die Vorrichtung 30 weist einen Prozessor 32 und einen Speicher 31 auf. Beispielsweise handelt es sich bei der Vorrichtung 30 um einen Mikrocontroller oder ein eingebettetes System. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Signalen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

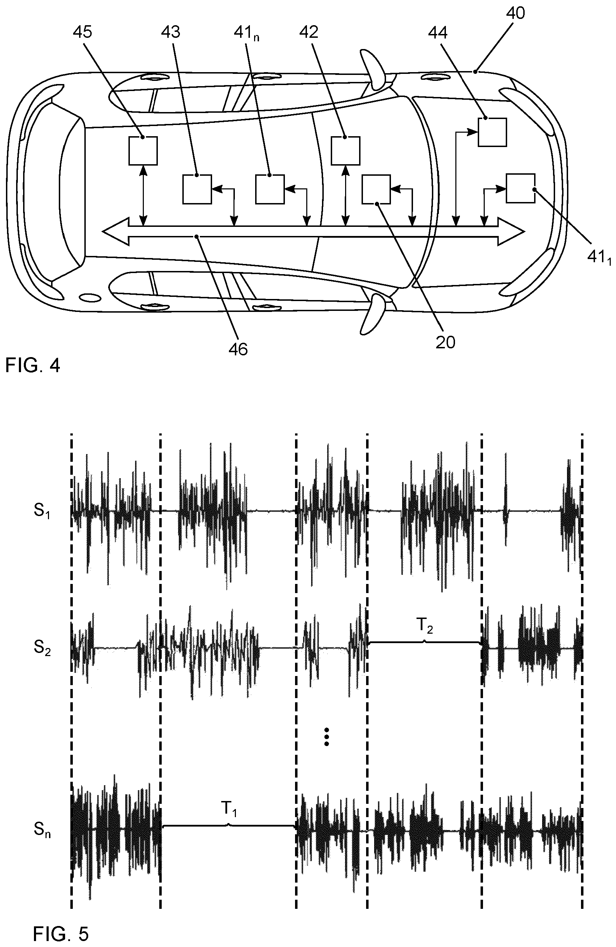

Nachfolgend sollen weitere Details der Erfindung anhand von Fig. 4 bis Fig. 11 beschrieben werden. Bei dieser Ausführungsform werden Signale eines Fortbewegungsmittels betrachtet. Selbstverständlich beschränkt sich die erfindungsgemäße Lösung nicht auf diese Anwendung. Sie kann unter anderem auch in mobilen Produktionsmaschinen genutzt werden.

Fig. 4 stellt schematisch ein Fortbewegungsmittel 40 dar, in dem eine erfindungsgemäße Lösung realisiert ist. Bei dem Fortbewegungsmittel 40 handelt es sich in diesem Beispiel um ein Kraftfahrzeug. Das Kraftfahrzeug weist eine Vielzahl von Sensoren 41ᵢ auf, von denen einige exemplarisch dargestellt sind und von denen Sensorsignale in Bezug auf eine Reihe von Komponenten des Kraftfahrzeugs bereitgestellt werden können. Weiterhin weist das Kraftfahrzeug eine erfindungsgemäße Vorrichtung 20 zum Verarbeiten der Signale auf. Weitere Komponenten des Kraftfahrzeugs sind ein Navigationssystem 42, eine Datenübertragungseinheit 43 sowie eine Reihe von Assistenzsystemen 44, von denen eines exemplarisch dargestellt ist. Mittels der Datenübertragungseinheit 43 kann z.B. eine Verbindung zu Dienstanbietern aufgebaut werden, z.B. zur weiteren Verarbeitung der Signale. Zur Speicherung von Daten ist ein Speicher 45 vorhanden. Der Datenaustausch zwischen den verschiedenen Komponenten des Kraftfahrzeugs erfolgt über ein Netzwerk 46, z.B. über einen CAN-Bus.

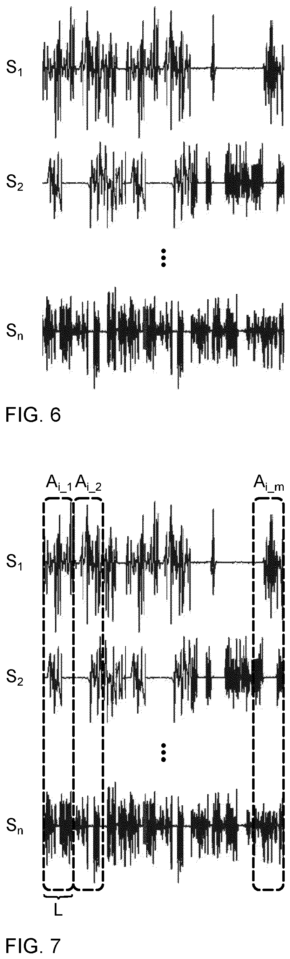

Fig. 5 zeigt schematisch eine Reihe von Signalen Sᵢ, die einer Vorverarbeitung unterzogen werden sollen. Es liegen n Signale Sᵢ vor, von denen beispielhaft drei Signale S₁, S₂, Sₙ dargestellt sind. Bei den Signalen kann es sich z.B. um Sensorsignale, modellierte Größen oder Stellgrößen handeln. Die Signale Sᵢ können z.B. auf dem CAN-Bus eines Kraftfahrzeugs übertragen werden. In den Signalen Sᵢ treten zum Teil Lücken bzw. Zeiträume Tᵢ auf, in denen keine verwertbaren Daten vorliegen. Diese Zeiträume Tᵢ werden vorzugsweise im Rahmen einer Vorverarbeitung aus allen Signalen Sᵢ entfernt, d.h. die entsprechenden Zeiträume Tᵢ werden aus den Signalen Sᵢ ausgeschnitten. Die Signale Sᵢ nach Abschluss der Vorverarbeitung sind in Fig. 6 gezeigt.

Fig. 7 zeigt schematisch eine Unterteilung der vorverarbeiteten Signale Sᵢ in Abschnitte A_{i_n}. Im dargestellten Beispiel werden die Signale Sᵢ in m Abschnitte A_{i_n} mit jeweils gleicher Länge L unterteilt. Auf Basis dieser Abschnitte A_{i_n} erfolgt nun eine Zeitreiheninterpretation, bei der für jedes Signal Sᵢ für jeden der Abschnitte A_{i_n} ein Merkmalsvektor extrahiert wird.

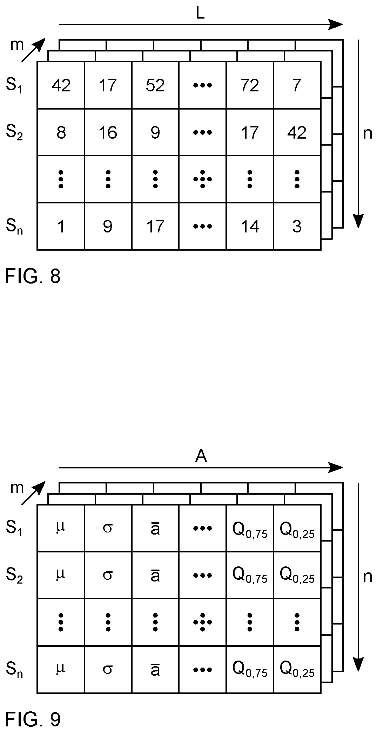

Fig. 8 veranschaulicht die Extraktion von Merkmalsvektoren aus den Abschnitten A_{i_n}. Nach der Extraktion liegen m Arrays mit Merkmalen vor. Die Dimensionen der m Arrays sind dabei zum einen durch die Anzahl n der Signale und zum anderen durch die Länge L der einzelnen Signalabschnitte A_{i_n} bestimmt. Auf Basis der einzelnen Merkmalsvektoren werden nun statistische Merkmale bestimmt. Die Länge L der einzelnen Signalabschnitte A_{i_n} kann z.B. empirisch bestimmt werden. Auswertungen haben gezeigt, dass für eine Bestimmung einer Alterung, die über einen Benutzungszeitraum von mehreren hundert Stunden auftritt, eine Aggregation im Bereich von einer Stunde gute Ergebnisse erzielt.

Fig. 9 veranschaulicht eine Transformation der Merkmalsvektoren in einen statistischen Merkmalsraum. Nach der Bestimmung der statistischen Merkmale liegen m Arrays mit statistischen Merkmalen vor. Die Dimensionen der m Arrays sind dabei zum einen wiederum durch die Anzahl n der Signale, zum anderen nun aber durch die Anzahl A der für jeden Merkmalsvektor bestimmten statistischen Merkmale bestimmt. Geht man davon aus, dass hochaufgelöste Zeitreihen im Fahrzeug mit einer Frequenz von 10 Hz aufgelöst sind, und werden diese Zeitreihen nun jeweils mit Hilfe eines statistischen Merkmals zu einer Stunde zusammengefasst, reduziert man die Menge an Daten von 1×60×60×10=36000 Messwerten auf einen Wert.

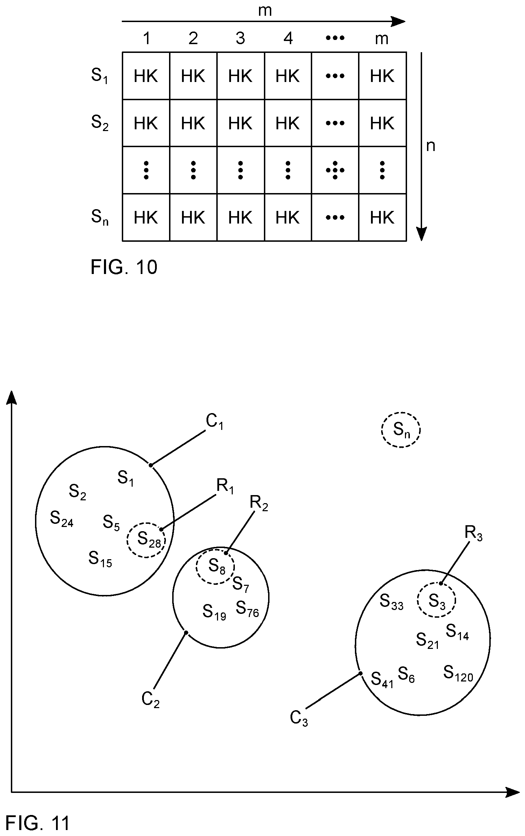

Fig. 10 veranschaulicht eine Transformation des Merkmalsraums der statistischen Merkmale in eine eindimensionale Darstellung. Zu diesem Zweck werden die statistischen Merkmale einer Hauptkomponentenanalyse unterzogen. In diesem Beispiel wird lediglich eine einzelne Hauptkomponente HK beibehalten. Nach der Hauptkomponentenanalyse liegt ein einzelnes Array mit Hauptkomponenten HK vor. Die Dimensionen des Arrays sind dabei zum einen wiederum durch die Anzahl n der Signale, zum anderen durch die Anzahl m der Abschnitte bestimmt. Dieses Array dient als Grundlage für einen Cluster-Algorithmus.

Fig. 11 illustriert auf Basis der eindimensionalen Darstellung der statistischen Merkmale generierte Cluster Cᵢ. Im dargestellten Beispiel sind drei Cluster C₁, C₂, C₃ zu erkennen. Jeder Cluster Cᵢ umfasst eine Mehrzahl von Signalen Sᵢ. Zusätzlich existiert ein Signal Sₙ, das keinem Cluster Cᵢ zugeordnet ist. Aus jedem Cluster Cᵢ kann nun ein Signal Sᵢ als Repräsentant Rᵢ ausgewählt werden. Dies kann beispielsweise der zuerst gefundene Teilnehmer des jeweiligen Clusters Cᵢ sein oder derjenige Teilnehmer, der innerhalb des Clusters Cᵢ am nächsten am Mittelpunkt des Clusters Cᵢ liegt. Die Repräsentanten Rᵢ sowie das keinem Cluster Cᵢ zugeordnete Signal Sₙ ergeben schließlich die resultierende Signalmenge, andeutet durch die gestrichelten Ellipsen.

Der erste Cluster C₁ kann z.B. die folgenden Signale Sᵢ umfassen:
S₁: Geschwindigkeit Rad vorne links
S₂: Geschwindigkeit Rad vorne rechts
S₂₄: Geschwindigkeit Rad hinten links
S₁₅: Geschwindigkeit Rad hinten rechts
S₅: Geschwindigkeit Rad
S₂₈: Geschwindigkeit des Fahrzeugs

Als Repräsentant R₁ des ersten Clusters C₁ dient hier das Signal S₂₈, d.h. die Geschwindigkeit des Fahrzeugs.

Der zweite Cluster C₂ kann z.B. die folgenden Signale Sᵢ umfassen:
S₇: Berechneter Gang
S₈: Gang
S₇₆: Zielgang
S₁₉: Gang 2

Als Repräsentant R₂ des zweiten Clusters C₂ dient hier das Signal S₈, d.h. der Gang.

Der dritte Cluster C₃ kann z.B. die folgenden Signale Sᵢ umfassen:
S₃: Zeit 1
S₃₃: Zeit 2
S₂₁: Zeit 3
S₁₄: Zeit 4
S₁₂₀: Zeit 5
S₆: Zeit 6
S₄₁: Zeit 7

Als Repräsentant R₃ des dritten Clusters C₃ dient hier das Signal S₃, d.h. ein erstes Zeitsignal.

Weitere Cluster können beispielsweise aus Signalen resultieren, die eine Stellung des Pedals und eine Motorleistung angeben, oder aus Signalen, die eine Öltemperatur und eine Kühlmitteltemperatur angeben.

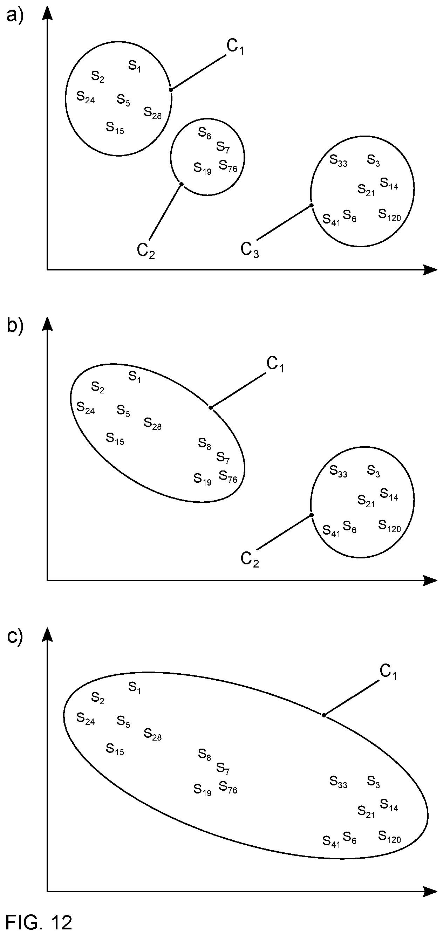

Betrachtet wird nachfolgend ein Fahrzeug, dass einer Route mit unterschiedlichen zur Verfügung stehenden Bandbreiten folgt und fortlaufend Daten bereitstellen soll. Die Route umfasst Abschnitte mit einer hohen Bandbreite, z.B. aufgrund einer Verfügbarkeit von 5G im Stadtgebiet, Abschnitte mit einer mittleren Bandbreite, z.B. 4G in Gebieten am Standrand, und Abschnitte mit einer niedrigen Bandbreite, z.B. 2G in kleineren Dörfern oder auf Landstraßen. Entsprechend der verfügbaren Bandbreite wird der verwendete Clusteralgorithmus so parametrisiert, dass in Abschnitten mit einer hohen Bandbreite viele Cluster gebildet und somit viele Repräsentanten übertragen werden, in Abschnitten mit einer mittleren Bandbreite eine mittlere Anzahl an Clustern gebildet und somit eine kleinere Anzahl Repräsentanten übertragen werden und in Abschnitten mit einer niedrigen Bandbreite wenige Cluster gebildet und somit wenige Repräsentanten übertragen werden. Die zu übertragende Datenmenge kann somit allein durch das Clustering an die verfügbare Bandbreite angepasst werden. Fig. 12 illustriert ein Beispiel eines Clusterings mit vielen Clustern (Fig. 12a)), einer mittleren Anzahl an Clustern (Fig. 12b)) und wenigen Clustern (Fig. 12c)).

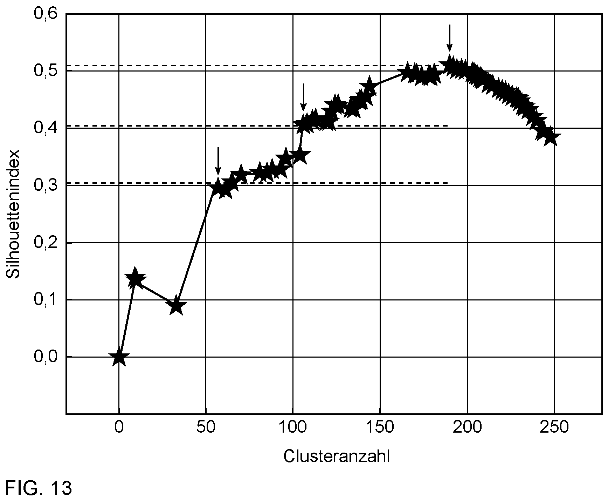

Im Folgenden soll beispielhaft erläutert werden, wie die Einstellungen der Hyperparameter für die verschiedenen verfügbaren Bandbreiten festgelegt werden können. Der Clusteralgorithmus weist Einstellmöglichkeiten auf, die sogenannten Hyperparameter, die das Ergebnis beeinflussen. Aus der Einstellung der Hyperparameter resultieren unterschiedliche Clusteranzahlen und Güten des Clusterings. Die Güte des Clustering wird durch den sogenannten Silhouettenindex beschrieben. Fig. 13 zeigt einen zugehörigen Silhouettenindex für unterschiedliche Anzahlen an aus dem Clustering resultierenden Clustern. Jeder Stern steht dabei für eine Konfiguration des Clusteralgorithmus und somit für entsprechende Einstellungen der Hyperparameter. Auf der x-Achse ist die aus den Einstellparametern resultierende Anzahl der Cluster aufgetragen, auf der y-Achse die zugehörige Qualität oder Güte des Clusteralgorithmus, wenn die entsprechenden Einstellparameter festgelegt werden. Die Daten in diesem Beispiel stammen von einem Fahrzeug, welches ca. 400 unterschiedliche Signale bereitstellt. Das beste Ergebnis wird mit ca. 190 Clustern erzielt. Der zugehörige Silhouettenindex liegt bei ca. 0,5. Nun können beispielsweise drei Kategorien definiert und den unterschiedlichen Bandbreiten zugeordnet werden. Die Kategorien sind in Fig. 13 durch die gestrichelten horizontalen Linien angedeutet. Die erste Kategorie umfasst Konfigurationen mit einem Silhouettenindex zwischen ca. 0,4 und dem Maximum. Die zweite Kategorie umfasst Konfigurationen mit einem Silhouettenindex zwischen ca. 0,3 und 0,4. Die dritte Kategorie umfasst Konfigurationen mit einem Silhouettenindex von weniger als ca. 0,3. Innerhalb jeder Kategorie wird nun beim Clustering die beste zur Verfügung stehende Konfiguration gewählt. Für eine hohe Bandbreite führt diese zu ca. 190 Clustern und einem Silhouettenindex von ca. 0,5. Bei einer mittleren Bandbreite liefert die beste Konfiguration ca. 102 Cluster und einen Silhouettenindex von ca. 0,4. Im Vergleich zu den 190 Clustern entspricht dies einer Verringerung der Datenübertragung von ca. 46%. Für eine niedrige Bandbreite liefert die beste Konfiguration ca. 54 Cluster und einen Silhouettenindex von ca. 0,3. Im Vergleich zu den 190 Clustern entspricht dies einer Verringerung der Datenübertragung von ca. 70%. Die jeweiligen Konfigurationen sind durch die eingezeichneten Pfeile markiert.

### Bezugszeichenliste

- 10: Sequenzieren der Signale
- 11: Bestimmen von statistischen Merkmalen
- 12: Transformieren eines Merkmalsraums
- 13: Clustern der Signale
- 14: Bestimmen von Signalen als Repräsentanten für die Cluster
- 15: Bereitstellen der Repräsentanten für eine Übertragung

- 20: Vorrichtung
- 21: Eingang
- 22: Sequenzierungsmodul
- 23: Analysemodul
- 24: Clustermodul
- 25: Kontrollmodul
- 26: Speicher
- 27: Ausgang
- 28: Benutzerschnittstelle

- 30: Vorrichtung
- 31: Speicher
- 32: Prozessor
- 33: Eingang
- 34: Ausgang

- 40: Fortbewegungsmittel
- 41ᵢ: Sensor
- 42: Navigationssystem
- 43: Datenübertragungseinheit
- 44: Assistenzsystem
- 45: Speicher
- 46: Netzwerk

- A: Anzahl der bestimmten statistischen Merkmale
- A_{i_n}: Abschnitt
- Cᵢ: Cluster
- HK: Hauptkomponente
- L: Länge der Abschnitte
- m: Anzahl der Abschnitte
- n: Anzahl der Signale
- Rᵢ: Repräsentant
- Sᵢ: Signal
- Tᵢ: Zeitraum

## Patentansprüche

1. Verfahren zum Verarbeiten von Signalen (Sᵢ) in einem Prozess fortlaufender Datenbereitstellung, mit den Schritten:
- Sequenzieren (10) der Signale (Sᵢ) in Abschnitte (A_{i_n});
- Bestimmen (11) zumindest eines statistischen Merkmals für jeden der Abschnitte (A_{i_n});
- Clustern (13) der Signale (Sᵢ) auf Basis der bestimmten statistischen Merkmale mittels eines Clusteralgorithmus;
- Bestimmen (14) von Repräsentanten (Rᵢ) für die Cluster (Cᵢ);
- Bereitstellen (15) der Repräsentanten (Rᵢ) für eine Übertragung; und
- Übertragen der bereitgestellten Repräsentanten (Rᵢ);
wobei eine Anzahl der Cluster (Cᵢ) automatisch an eine sich ändernde verfügbare Bandbreite (B) angepasst wird, indem im Falle einer hohen Bandbreite viele Cluster (Cᵢ) gebildet (13) und somit viele Repräsentanten (Rᵢ) übertragen werden, im Falle einer mittleren Bandbreite eine mittlere Anzahl an Clustern (Cᵢ) gebildet (13) und somit eine kleinere Anzahl Repräsentanten (Rᵢ) übertragen werden und im Falle einer niedrigen Bandbreite wenige Cluster (Cᵢ) gebildet (13) und somit wenige Repräsentanten (Rᵢ) übertragen werden.

2. Verfahren gemäß Anspruch 1, wobei für die Anpassung der Anzahl der Cluster (Cᵢ) an die verfügbare Bandbreite (B) Hyperparameter des Clusteralgorithmus eingestellt werden.

3. Verfahren gemäß Anspruch 1 oder 2, wobei ein Merkmalsraum der bestimmten statistischen Merkmale vor dem Clustern (13) in einen Raum niedrigerer Dimension transformiert wird (12).

4. Verfahren gemäß Anspruch 3, wobei für das Transformieren (12) des Merkmalsraums eine Hauptkomponentenanalyse auf die bestimmten statistischen Merkmale angewandt wird oder zumindest ein bestimmtes statistisches Merkmal ausgewählt wird.

5. Verfahren gemäß einem der vorherigen Ansprüche, wobei das zumindest eine statistische Merkmal ein Mittelwert, ein Maximalwert, ein Minimalwert oder ein Quantil ist.

6. Verfahren gemäß einem der vorherigen Ansprüche, wobei für das Clustern (13) der Signale (Sᵢ) ein dichtebasiertes Clusterverfahren, ein partitionierendes Clusterverfahren oder ein hierarchisches Clusterverfahren verwendet wird.

7. Computerprogramm mit Instruktionen, die bei Ausführung durch einen Computer den Computer zur Ausführung der Schritte eines Verfahrens gemäß einem der Ansprüche 1 bis 6 zum Verarbeiten von Signalen (Sᵢ) in einem Prozess fortlaufender Datenbereitstellung veranlassen.

8. Vorrichtung (30) zum Verarbeiten von Signalen (Sᵢ) in einem Prozess fortlaufender Datenbereitstellung, mit einem Speicher (31), in dem Instruktionen abgelegt sind, und einem Prozessor (32), wobei der Prozessor (32) eingerichtet ist, bei Ausführung der Instruktionen die Schritte eines Verfahren gemäß einem der Ansprüche 1 bis 6 zum Verarbeiten von Signalen (Sᵢ) in einem Prozess fortlaufender Datenbereitstellung auszuführen

9. Fortbewegungsmittel (40), **dadurch gekennzeichnet, dass** das Fortbewegungsmittel (40) eine Vorrichtung (30) gemäß Anspruch 8 zum Verarbeiten von Signalen (Sᵢ) in einem Prozess fortlaufender Datenbereitstellung aufweist oder eingerichtet ist, ein Verfahren gemäß einem der Ansprüche 1 bis 6 zum Verarbeiten von Signalen (Sᵢ) in einem Prozess fortlaufender Datenbereitstellung auszuführen.

## Claims

1. Method for processing signals (Sᵢ) in a process of continuous data provision, comprising the steps of:
- sequencing (10) the signals (Sᵢ) into portions (A_{i_n});
- determining (11) at least one statistical feature for each of the portions (A_{i_n});
- clustering (13) the signals (Sᵢ) on the basis of the determined statistical features by means of a clustering algorithm;
- determining (14) representatives (Rᵢ) for the clusters (Cᵢ);
- providing (15) the representatives (Rᵢ) for a transfer; and
- transferring the provided representatives (Rᵢ);
wherein the number of clusters (Cᵢ) is automatically adapted to a changing available bandwidth (B) in that many clusters (Cᵢ) are formed (13), and thus many representatives (Rᵢ) are transferred, in the case of a high bandwidth, a medium number of clusters (Cᵢ) are formed (13), and thus a smaller number of representatives (Rᵢ) are transferred, in the case of a medium bandwidth, and few clusters (Cᵢ) are formed (13), and thus few representatives (Rᵢ) are transferred, in the case of a low bandwidth.

2. Method according to claim 1, wherein, for the adaptation of the number of clusters (Cᵢ) to the available bandwidth (B), hyperparameters of the clustering algorithm are set.

3. Method according to claim 1 or 2, wherein, before the clustering (13), a feature space of the determined statistical features is transformed (12) into a space of lower dimension.

4. Method according to claim 3, wherein, for the transformation (12) of the feature space, a principal component analysis is applied to the determined statistical features or at least one determined statistical feature is selected.

5. Method according to any of the preceding claims, wherein the at least one statistical feature is an average value, a maximum value, a minimum value or a quantile.

6. Method according to any of the preceding claims, wherein, for the clustering (13) of the signals (Si), a density-based clustering method, a partitioning clustering method, or a hierarchical clustering method is used.

7. Computer program comprising instructions which, upon execution by a computer, cause the computer to execute the steps of a method according to any of claims 1 to 6 for processing signals (Sᵢ) in a process of continuous data provision.

8. Device (30) for processing signals (Sᵢ) in a process of continuous data provision, comprising a memory (31) in which instructions are stored and a processor (32), wherein the processor (32) is configured, upon execution of the instructions, to execute the steps of a method according to any of claims 1 to 6 for processing signals (Sᵢ) in a process of continuous data provision

9. Means of transport (40), **characterized in that** the means of transport (40) has a device (30) according to claim 8 for processing signals (Sᵢ) in a process of continuous data provision or is configured to execute a method according to any of claims 1 to 6 for processing signals (Sᵢ) in a process of continuous data provision.

## Revendications

1. Procédé pour le traitement de signaux (Sᵢ) dans un processus de fourniture de données en continu, comportant les étapes consistant à :
- séquencer (10) les signaux (Sᵢ) en sections (A_{i_n}) ;
- déterminer (11) au moins une caractéristique statistique pour chacune des sections (A_{i_n}) ;
- former des grappes (13) des signaux (Sᵢ) sur la base des caractéristiques statistiques déterminées au moyen d'un algorithme de grappes ;
- déterminer (14) des représentants (Rᵢ) pour les grappes (Cᵢ) ;
- fournir (15) les représentants (Rᵢ) pour une transmission ; et
- transmettre les représentants (Rᵢ) fournis ;
dans lequel un certain nombre des grappes (Cᵢ) est adapté automatiquement à une largeur de bande (B) disponible qui varie, dans lequel, dans le cas d'une largeur de bande élevée, de nombreuses grappes (Cᵢ) sont formées (13) et ainsi de nombreux représentants (Rᵢ) sont transmis, dans le cas d'une largeur de bande moyenne, un nombre moyen de grappes (Cᵢ) est formé (13) et ainsi un plus petit nombre de représentants (Rᵢ) est transmis et dans le cas d'une largeur de bande faible, peu de grappes (Cᵢ) sont formées (13) et ainsi peu de représentants (Rᵢ) sont transmis.

2. Procédé selon la revendication 1, dans lequel, pour l'adaptation du nombre de grappes (Cᵢ) à la largeur de bande (B) disponible, des hyperparamètres de l'algorithme de grappes sont réglés.

3. Procédé selon la revendication 1 ou 2, dans lequel un espace de caractéristiques des caractéristiques statistiques déterminées est transformé (12) en un espace de dimension inférieure avant la formation de grappes (13).

4. Procédé selon la revendication 3, dans lequel, pour la transformation (12) de l'espace de caractéristiques, une analyse de composants principaux est appliquée aux caractéristiques statistiques déterminées ou au moins une caractéristique statistique déterminée est sélectionnée.

5. Procédé selon l'une des revendications précédentes, dans lequel l'au moins une caractéristique statistique est une valeur moyenne, une valeur maximale, une valeur minimale ou un quantile.

6. Procédé selon l'une des revendications précédentes, dans lequel, pour la formation de grappes (13) des signaux (Si), un procédé de formation de grappes basé sur la densité, un procédé de formation de grappes basé sur la partition ou un procédé de formation de grappes hiérarchique est utilisé.

7. Programme informatique comportant des instructions, lesquelles, lors de leur exécution par un ordinateur, amènent l'ordinateur à exécuter les étapes d'un procédé selon l'une des revendications 1 à 6 pour le traitement de signaux (Sᵢ) dans un processus de fourniture de données en continu.

8. Dispositif (30) pour le traitement de signaux (Sᵢ) dans un processus de fourniture de données en continu, comportant une mémoire (31) dans laquelle des instructions sont stockées, et un processeur (32), dans lequel le processeur (32) est configuré pour exécuter, lors de l'exécution des instructions, les étapes d'un procédé selon l'une des revendications 1 à 6 pour le traitement de signaux (Sᵢ) dans un processus de fourniture de données en continu.

9. Moyen de locomotion (40), **caractérisé en ce que** le moyen de locomotion (40) présente un dispositif (30) selon la revendication 8 pour le traitement de signaux (Sᵢ) dans un processus de fourniture de données en continu ou est configuré pour exécuter un procédé selon l'une des revendications 1 à 6 pour le traitement de signaux (Sᵢ) dans un processus de fourniture de données en continu.
